# EUROPÄISCHE PATENTSCHRIFT

(11) **EP 3 652 354 B1**
(45) Veröffentlichungstag und Bekanntmachung des Hinweises auf die Patenterteilung: **23.06.2021**
(21) Anmeldenummer: 18728130.8
(22) Anmeldetag: 29.05.2018
(51) Int. Cl.: C21D 9/56, F27D 99/00

(54) **VERFAHREN ZUR REDUKTION VON STICKOXIDEN IN BANDBEHANDLUNGSÖFEN**
METHOD FOR REDUCING NITROGEN OXIDES IN STRIP HEAT TREATMENT FURNACES
PROCÉDÉ DE RÉDUCTION D'OXYDES D'AZOTE DANS DES FOURS DE TRAITEMENT DE BANDES

(30) Priorität: 13.07.2017 AT 505842017
(43) Veröffentlichungstag der Anmeldung: 20.05.2020
(73) Patentinhaber: Andritz Technology and Asset Management GmbH, 8045 Graz (AT)
(72) Erfinder: BORREL, Pierre-Jerome, 93100 Montreuil (FR); BLAKE, Eric, Sewickley Pennsylvania 151543 (US); HAMMAN, Martin, 91120 Palaiseau (FR)
(74) Vertreter: Tschinder, Thomas
(86) Internationale Anmeldenummer: PCT/EP2018/064082
(87) Internationale Veröffentlichungsnummer: WO 2019/011519

(56) Entgegenhaltungen:
- EP-A1- 2 458 022
- DE-A1-102013 105 543
- DE-T2- 3 688 868
- JP-A- S57 104 632
- US-A- 4 760 995
- US-A1- 2013 277 896

## Beschreibung

Den Gegenstand dieser Erfindung bildet ein Verfahren zur Wärmebehandlung eines Metallbandes in einem direkt befeuerten Ofen und nachfolgend in einem mit Strahlungsrohren beheizten Ofen.

Die DE 10 2013 105 543 A1 offenbart einen Ofen zur Behandlung eines Metallbandes mit einer Vorwärmzone. Die Vorwärmzone wird dabei über die Verbrennungsabgase der Brenner aus dem Ofen beheizt. Das Metallband wird hier in einer Schutzgas-/ Reaktionsgasatmosphäre beheizt, wobei hier die Verbrennungsabgase nicht frei in das Ofengehäuse eingeleitet werden dürfen.

Die US 4,760,995 offenbart einen Ofen mit einer direkt beheizten Zone und einer nachfolgenden indirekt beheizten Zone, wobei die Abgase der direkt beheizten Zone in bekannter Art und Weise einem Nachbrenner zugeführt werden.

Diese Wärmebehandlung von Metallbändern erfolgt häufig vor dem Verzinken eines Metallbandes oder auch in Glühöfen nach einer Beizlinie.

Bei einem direkt befeuerten Ofen (DFF, Direct Fired Furnace), sind die Brenner direkt im Ofeninneren angeordnet.

Mit diesem Ofen kann eine gezielte Oxidation der Stahlbandoberfläche herbeigeführt werden. Durch Anpassung des Lambda-Wertes des Brennergases können die Atmosphärenbedingungen von oxidativ nach reduktiv verändert werden. Auf diesem Weg kann die Oxidation der Stahlbandoberfläche gezielt gesteuert werden.

Nachfolgend erfolgt häufig die Wärmebehandlung in einem indirekt beheizten RTF-Ofen (RTF, Radiant Tube Furnace), bei dem mit Hilfe von beheizten Strahlungsrohren die Beheizung des Metallbandes über Wärmestrahlung erfolgt. Die einzelnen Strahlungsrohre werden in bekannter Weise von Innen über Brenner beheizt. Die Abgase der Strahlungsrohrbrenner werden zur Verbrennungsoptimierung teilweise (< 30%) zum jeweiligen Brenner rückgeführt (rezirkuliert). Diese Abgasrezirkulation ist eine sehr wirksame Methode zur Absenkung der Spitzentemperaturen in der Flamme und führt somit zu einer Minderung der Stickoxidbildung. Der Großteil der Abgase wird jedoch einem Wärmetauscher zugeführt und schlussendlich über einen Kamin ins Freie geleitet.

Die Brenner der direkt befeuerten Öfen werden in der Regel mit Gas (Erdgas oder Koksofengas) betrieben. Die Abgase der Brenner werden einer mit einem Brenner ausgestatteten Nachverbrennungskammer zugeführt und dort nachverbrannt.

Sowohl bei der Verbrennung in den Brennern der direkt beheizten Zone, als auch bei der Nachverbrennung entstehen Stickoxide (NOₓ), die im Abgas enthalten sind. Unter der Bezeichnung Stickoxid (NOₓ) versteht man die Summe der beim Verbrennungsprozess entstandenen Oxide des Stickstoffs. Dabei kommt den Verbindungen NO und NO₂ in der Regel die größte Bedeutung zu. NOₓ kann entweder bei der Umsetzung des Brennstoffes oder durch die hohen Prozesstemperaturen direkt aus der Verbrennungsluft entstehen. Die NOₓ-Bildung wird somit bei hohen Verbrennungstemperaturen stark begünstigt. Durch neu entwickelte Gasbrenner konnten die Stickoxidemissionen schon erheblich reduziert werden.

Zur Reduktion der Stickoxidbildung bei der Nachverbrennung werden derzeit schon unterschiedliche Maßnahmen angewendet. Eine Maßnahme betrifft die Verringerung der Verbrennungstemperatur in der Nachverbrennungskammer durch Verlängerung der nicht befeuerten Zone des Ofens. Durch diese Zone gelangen die heißen Abgase der Brenner in die Nachverbrennungskammer. Durch die verlängerte Zone kühlen die Abgase vor der Nachverbrennung stärker ab und die Temperatur in der Nachverbrennungskammer sinkt. Eine weitere Möglichkeit, die Temperatur bei der Nachverbrennung niedrig zu halten, besteht in der Zufuhr von nicht vorgewärmter Verbrennungsluft. Trotz dieser Maßnahmen werden Stickoxide bei der Nachverbrennung gebildet.

Die Richtlinien hinsichtlich der Stickoxidemissionen werden immer mehr verschärft, daher wäre eine weitere Reduktion durchaus wünschenswert.

Der Erfindung liegt daher die Aufgabe zugrunde, ein kostengünstiges Verfahren bereitzustellen, mit dem die Stickoxidemissionen bei Bandbehandlungsanlagen weiter reduziert werden können.

Gelöst wird diese Aufgabe durch ein Verfahren gemäß Patentanspruch 1.

Erfindungsgemäß werden die Abgase zumindest teilweise aus den Strahlungsrohren einem Brenner im direkt befeuerten Ofen zugeführt.

Die Abgase der Strahlungsrohre enthalten Kohlendioxid (CO₂) und Wasserdampf (H₂O). Diese schweren Moleküle weisen ein großes Wärmefassungsvermögen (heat absorption capacity) auf. Dadurch können diese Moleküle einen Teil der Verbrennungswärme aufnehmen, wodurch die Temperaturspitzen während der Verbrennung reduziert werden und so die Bildung von NOₓ vermindert wird.

Vorzugsweise werden die Abgase aus den Strahlungsrohren gekühlt, bevor sie dem direkt befeuerten Ofen zugeführt werden. Diese Kühlung kann über Wärmetauscher oder über die Vermischung mit Luft erfolgen.

Es ist günstig, wenn ein Teil der aus den Strahlungsrohren kommenden Abgase der Nachverbrennungskammer zugeführt wird, vorzugsweise der Verbrennungsluft für den oder die Nachbrenner. Dadurch wird der Verbrennungsprozess verlangsamt und die Verbrennungstemperatur erniedrigt.

Die Abgase können aber auch in die Flamme des Nachbrenners oder in den gasförmigen Brennstoff des Nachbrenners gemischt werden.

Es ist auch denkbar, dass ein Teil der aus den Strahlungsrohren kommenden Abgase mit der Verbrennungsluft für die Brenner der direkt befeuerten Zone vermischt werden, auch dies führt zu einer Vergleichmäßigung der Verbrennungstemperatur.

Beispielsweise kann der Teil der aus den Strahlungsrohren kommenden Abgase zumindest einem Brenner vom Typ "Nozzel Mix" zugeführt werden. Bei diesem Brennertyp wird die Verbrennungsluft und das Brennergas direkt in der Brennerdüse gemischt.

Häufig weist der direkt befeuerte Ofen in Bandlaufrichtung betrachtet vor der direkt beheizten Zone einen nicht beheizten Bereich auf. Die Abgase des beheizten Bereiches strömen durch diesen Bereich hindurch und wärmen so das Metallband vor. Erst danach werden die Abgase in der Nachverbrennungskammer nachverbannt. Dabei ist es vorteilhaft, wenn in den nicht beheizten Bereich Methan (CH₄) in das Abgas eingedüst bzw. eingeblasen wird. Dadurch wird das im Abgas enthaltene NOₓ zumindest teilweise in Cyanwasserstoff (HCN) umgewandelt (Reburning).

Zum Abbau des gebildeten Cyanwasserstoffs kann dann in die Nachverbrennungskammer Luft oder Sauerstoff eingedüst werden, wodurch der Cyanwasserstoff wieder abgebaut wird.

Vorzugsweise wird dem Methan vor der Eindüsung in den nicht beheizten Bereich Stickstoff zugeführt. Durch die Zufuhr von Stickstoff lässt sich das Methan besser mit den Abgasen vermischen. Die Vermischung und Eindüsung von Methan und Stickstoff kann dabei mit Hilfe von Venturidüsen erfolgen. Das Verhältnis von Methan zu Stickstoff kann im Bereich von 1:10 liegen.

Das Methan kann an mehreren Stellen in den nicht beheizten Bereich eingedüst werden, die unterschiedlich weit vom nächstliegenden Brenner entfernt sind.

Es ist günstig, wenn 5 - 20 % der Abgase aus den Strahlungsrohren dem direkt befeuerten Ofen zugeführt werden.

Im Folgenden werden drei Ausführungsbeispiele der Erfindung anhand von Zeichnungen beschrieben. Es zeigen:
Fig. 1 eine schematische Ansicht eines direkt befeuerten Ofens (DFF), bei dem die Abgase des mit Strahlrohren beheizten Ofens (RTF) der Nachbrennkammer zugeführt werden;
Fig. 2 eine schematische Ansicht, bei der die Abgase den Brennern des direkt befeuerten Ofens zugeführt werden;
Fig. 3 eine Kombination der Figuren 1 und 2 wobei zusätzlich Methan in den nicht befeuerten Bereich des DFF eingedüst bzw. eingeblasen wird.

Gleiche Bezugszeichen in den einzelnen Abbildungen bezeichnen jeweils gleiche Anlagenteile.

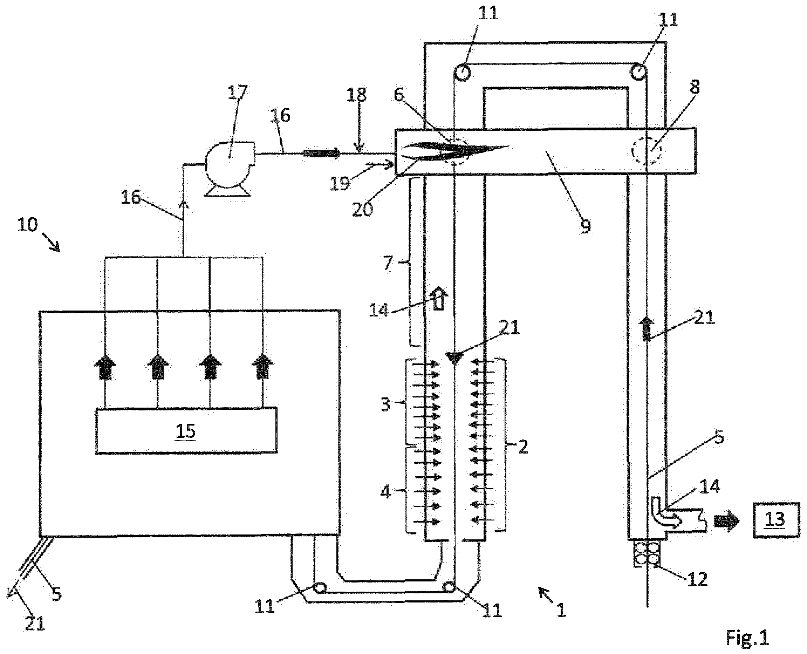

In Figur 1 ist eine Anlage zur Wärmebehandlung eines Metallbandes 5 schematisch dargestellt. Das Metallband 5 durchläuft zuerst einen direkt befeuerten Ofen (Direct Fired Furnace, DFF) 1 und danach einen mit Strahlungsrohren beheizten Ofen 10 (Radiant Tube Furnace, RTF). In den direkt befeuerten Ofen 1 tritt das Metallband 5 unten über eine Gasschleuse 12 ein und läuft in Richtung 21 nach oben. In diesem Bereich wird das Metallband 5 durch die heißen Abgase aus der Nachverbennungskammer 9 vorgewärmt. Im oberen Ofenabschnitt wird das Metallband 5 durch Umlenkwalzen 11 umgelenkt und durchläuft den nichtbefeuerten Bereich 7, der direkt vor dem befeuerten Bereich 2 angeordnet ist.

Der nicht befeuerte Bereich weist eine Länge von mehreren Metern auf und dient der Vorwärmung des Metallbandes 5, wodurch auch die heißen Brennerabgase 14 abkühlen. Unter dem nicht beheizten Bereich 7 wird hier der Bereich verstanden, der in Bandlaufrichtung 21 betrachtet vor dem beheizten Bereich 2 angeordnet ist und in dem keine Brenner angeordnet sind.

Im beheizten Bereich 2 des Ofens 1 wird das Metallband 5 mit Hilfe von Gasbrennern erwärmt. Dabei durchläuft das Metallband 5 zuerst eine Zone 3, in der Brenner vom Typ "Nozzle Mix" in der Ofenwand angeordnet sind und danach eine Zone 4 mit Brennern vom Typ "Premix".

Das durch die Gasbrenner in der direkt beheizten Zone 2 gebildete Abgas 14 strömt im Ofen 1 nach oben und wird dort in bekannter Weise über eine Öffnung 6 der Nachbrennkammer 9 zugeführt, in der ein Nachbrenner 20 zur Nachverbrennung der Abgase 14 angeordnet ist. Dabei verbrennt (bzw. oxidiert vollständig) im Wesentlichen das in den Abgasen 14 enthaltene Kohlenmonoxid (CO) und der Wasserstoff (H₂). Das Metallband 5 durchläuft die Nachbrennkammer 9 nicht. Die Abgase der Nachbrennkammer 9 werden dann wieder über die Öffnung 8 in den Ofenbereich geleitet, der vom Metallband 5 durchlaufen wird. Im unteren Abschnitt des Ofens 1 werden die Abgase 14 einem Wärmerückgewinnungssystem 13 zugeführt.

Am unteren Ende des Ofens 1 wird das Metallband 5 mit Hilfe der Umlenkwalze 11 umgelenkt und dem mit Strahlrohren beheizten Ofen 10 zugeführt. Der Bandlauf im Ofen 10 ist hier nicht dargestellt, da dies für die Erfindung nebensächlich ist.

Wesentlich für die vorliegende Erfindung ist es, dass die Abgase 16 der Strahlungsrohre zumindest teilweise dem direkt befeuerten Ofen 1 zugeführt werden.
Im vorliegenden Beispiel werden diese Abgase 16 über einen Kollektor 15 gesammelt und über ein Gebläse 17 dem Nachbrenner 20 zugeführt. Die Abgase 16 werden vor dem Nachbrenner 20 mit Verbrennungsluft 18 vermischt. Die Brenngaszufuhr erfolgt über die Leitung 19. Die Abgase 16 nehmen einen Teil der Verbrennungswärme auf, wodurch die Temperaturspitzen während der Nachverbrennung erniedrigt werden und so die Bildung von NOₓ vermindert wird.

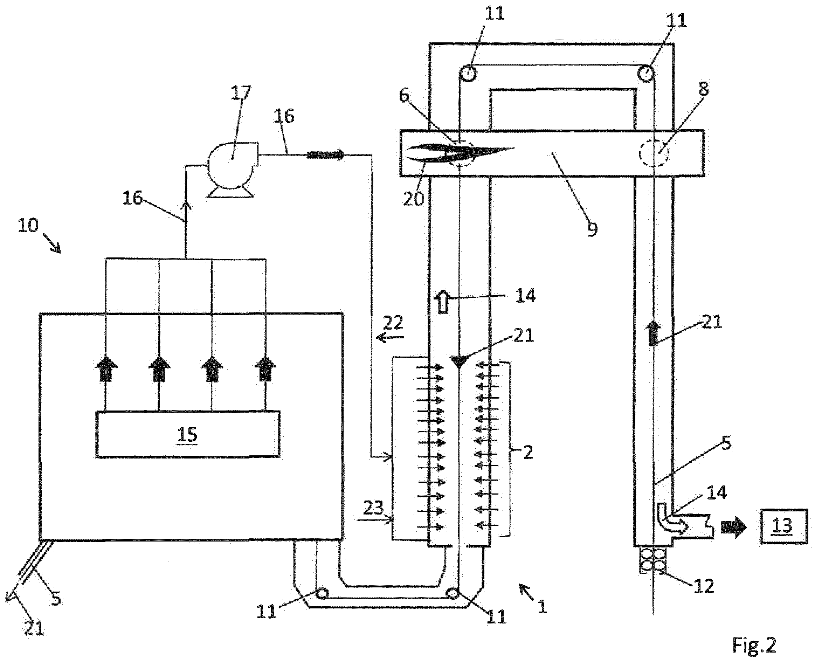

In Figur 2 werden die Abgase 16 aus dem mit Strahlungsrohren beheizten Ofen 10 zumindest teilweise den Brennern des direkt befeuerten Ofens 1 zugeführt. Im vorliegenden Beispiel werden sie zuvor mit der Verbrennungsluft 22 vermischt. Zusätzlich wird den Brennern gasförmiger Brennstoff 23 zugeführt. Auch dies führt zu einer Stickoxidreduktion, da durch die Abgaszufuhr 16 die Temperaturspitzen in den Brennern verringert werden.

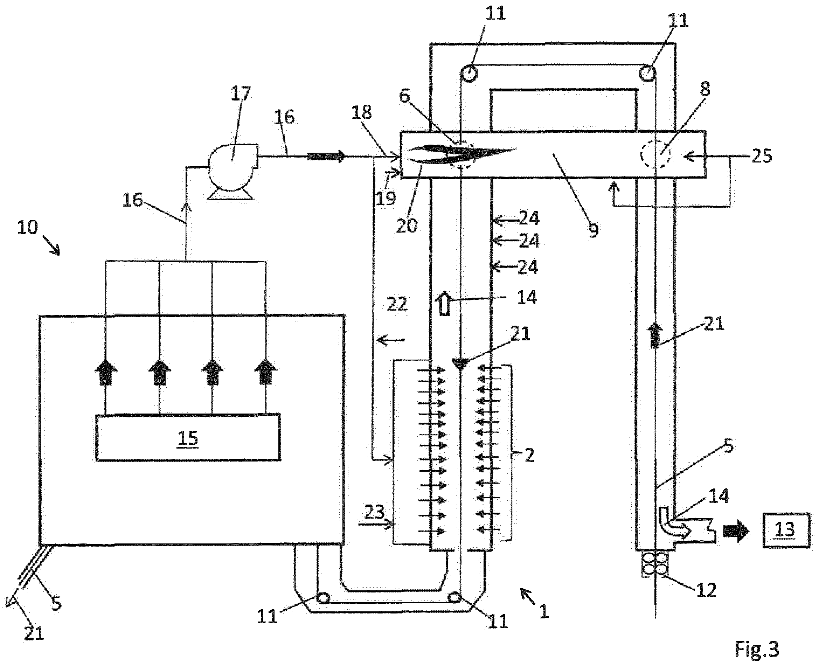

Figur 3 zeigt ein Ausführungsbeispiel bei dem die Abgase des RTF 10 der Nachbrennkammer 9 und den Brennern des direkt befeuerten Ofens 1 zugeführt werden. Zusätzlich wird zur weiteren Verminderung des Stickoxidanteils in den nicht beheizten Bereich 7 des Ofens 1 Methan (CH4) über die Zufuhrleitungen 24 eingedüst bzw. mit Hilfe von Stickstoff eingeblasen. Das Methan vermischt sich mit den heißen Abgasen und die Stickoxide reagieren mit dem Methan zu Cyanwasserstoff. Es ist auch möglich für diese Aufgabe einen herkömmlichen Brenner zu verwenden, bei dem die Verbrennungsluft durch Stickstoff ersetzt wird.

Die Methaneindüsung kann an mehreren Stellen mit unterschiedlichem Abstand zum direkt befeuerten Bereich 2 erfolgen, beispielsweise im Abstand von Im, 2m und 3m vom nächstliegenden Brenner.

Die Methangaseindüsung lässt sich leicht in bestehende Anlagen nachrüsten und so die Stickoxidemission verringern. Mit dem vorliegenden Verfahren lassen sich NOₓ Werte im Bereich von 100 mg/Nm³ oder weniger erreichen.

Die benötigten Methangasmengen können dabei relativ gering sein. Für einen handelsüblichen Ofen 1 können bereits 5 m³/h ausreichend sein. Es ist sinnvoll, dass dieser nicht beheizte Bereich 7 weitgehend frei von Sauerstoff (O₂ Anteil < 0,05%) ist, damit nicht dieser mit dem eingeblasenen Methan reagiert. Zur Gewährleistung dieser Sauerstofffreiheit können zumindest die nächstliegenden Brenner mit einem Brennstoffüberschuss betrieben werden, damit allfällig vorhandener Sauerstoff zuvor verbrennt.

Zum Abbau des giftigen Cyanwasserstoffs wird in die Nachverbrennungskammer 9 über die Leitungen 25 Sauerstoff (O₂) oder Luft eingeblasen, dadurch reagiert der Cyanwasserstoff zu Stickstoff (N2), Kohlendioxid und Wasserstoff bzw. Wasserdampf.

Das erfindungsgemäße Verfahren kann natürlich auch in einer horizontalen Ofenkonfiguration angewendet werden.

## Patentansprüche

1. Verfahren zur Behandlung eines Metallbandes (5), wobei das Metallband (5) zuerst in einem direkt befeuerten Ofen (1) wärmebehandelt wird und danach in einem mit Strahlungsrohren beheizten Ofen (10) weiter wärmebehandelt wird, **dadurch gekennzeichnet, dass** zumindest ein Teil der Abgase (16) aus den Strahlungsrohren einem Brenner im direkt befeuerten Ofen (1) zugeführt wird.

2. Verfahren nach Anspruch 1, **dadurch gekennzeichnet, dass** die Abgase (16) gekühlt werden, beispielsweise mit Hilfe eines Wärmetauschers, bevor sie dem direkt befeuerten Ofen (1) zugeführt werden.

3. Verfahren nach Anspruch 1 oder 2, **dadurch gekennzeichnet, dass** der direkt befeuerte Ofen (1) eine Nachverbrennungskammer (9) aufweist, in der die Abgase (14) aus dem direkt befeuerten Ofen (1) nachverbrannt werden, wobei zumindest ein Teil der aus den Strahlungsrohren kommenden Abgase (16) der Nachverbrennungskammer (9) zugeführt wird.

4. Verfahren nach Anspruch 3, **dadurch gekennzeichnet, dass** ein Teil der aus den Strahlungsrohren kommenden Abgase (16) direkt in die Nachverbrennungskammer (9) eingeleitet wird.

5. Verfahren nach Anspruch 3, **dadurch gekennzeichnet, dass** ein Teil der aus den Strahlungsrohren kommenden Abgase (16) mit der Verbrennungsluft (18) für den Nachbrenner (20) der Nachverbrennungskammer (9) vermischt werden.

6. Verfahren nach einem der Ansprüche 1 bis 5, **dadurch gekennzeichnet, dass** ein Teil der aus den Strahlungsrohren kommenden Abgase (16) mit der Verbrennungsluft (22) für die Brenner der direkt befeuerten Zone (2) vermischt wird.

7. Verfahren nach Anspruch 6, **dadurch gekennzeichnet, dass** als ein Teil der aus den Strahlungsrohren kommenden Abgase (16) zumindest einem Brenner vom Typ Nozzel Mix zugeführt wird.

8. Verfahren nach einem der Ansprüche 1 bis 7, **dadurch gekennzeichnet, dass** der direkt befeuerte Ofen (1) in Bandlaufrichtung (21) betrachtet vor der direkt beheizten Zone (2) einen nicht beheizten Bereich (7) aufweist, durch den die Abgase (14) des beheizten Bereiches (2) hindurchströmen und dort das Metallband (5) vorwärmen und wobei die Abgase (14) nach dem nicht beheizten Bereich (7) in einer Nachverbrennungskammer (9) nachverbannt werden, wobei in den nicht beheizten Bereich (7) Methan in das Abgas (14) eingeblasen wird, wodurch im Abgas (14) enthaltene Stickoxide zumindest teilweise zu Cyanwasserstoff umgewandelt werden.

9. Verfahren nach Anspruch 8, **dadurch gekennzeichnet, dass** in die Nachverbrennungskammer (9) Luft oder Sauerstoff (25) eingeblasen wird, wodurch der Cyanwasserstoff zumindest teilweise abgebaut wird.

10. Verfahren nach einem der Ansprüche 1 bis 9, **dadurch gekennzeichnet, dass** 5 - 20 % der Abgase (16) aus den Strahlungsrohren dem direkt befeuerten Ofen (1) zugeführt werden.

## Claims

1. Method for treating a metal strip (5), where the metal strip (5) undergoes heat treatment first of all in a directly fired furnace (1) and is subsequently heat-treated further in a radiant tube furnace (10), **characterised in that** at least part of the exhaust gases (16) from the radiant tubes is fed to a burner in the directly fired furnace (1).

2. Method according to Claim 1, **characterised in that** the exhaust gases are cooled (16), for example with the aid of a heat exchanger, before being fed to the directly fired furnace (1).

3. Method according to Claim 1 or 2, **characterised in that** the directly fired furnace (1) has an afterburner chamber (9) in which the exhaust gases (14) from the directly fired furnace (1) undergo post-combustion, where at least part of the exhaust gases (16) coming from the radiant tubes is fed to the afterburner chamber (9).

4. Method according to Claim 3, **characterised in that** part of the exhaust gases (16) coming from the radiant tubes is fed directly to the afterburner chamber (9).

5. Method according to Claim 3, **characterised in that** part of the exhaust gases (16) coming from the radiant tubes is mixed with the combustion air (18) for the afterburner (20) in the afterburner chamber (9).

6. Method according to one of Claims 1 to 5, **characterised in that** part of the exhaust gases (16) coming from the radiant tubes is mixed with the combustion air (22) for the burners in the directly fired zone (2).

7. Method according to Claim 6, **characterised in that** part of the exhaust gases (16) coming from the radiant tubes is fed to a least one nozzle mix type burner.

8. Method according to one of Claims 1 to 7, **characterised in that** the directly fired furnace (1) has a non-fired zone (7) ahead of the directly fired zone (2), when viewed in strip running direction (21), through which the exhaust gases (14) from the fired zone (2) flow and pre-heat the metal strip (5) there, and where the exhaust gases (14) undergo post-combustion after the non-fired zone (7) in an afterburner chamber (9), where methane is blown into the exhaust gas (14) in the non-fired zone (7), which causes at least some of the nitrogen oxides contained in the exhaust gas (14) to be converted into hydrogen cyanide.

9. Method according to Claim 8, **characterised in that** air or oxygen (25) is blown into the post-combustion chamber (9), which at least partly degrades the hydrogen cyanide.

10. Method according to one of Claims 1 to 9, **characterised in that** 5-20% of the exhaust gases (16) from the radiant tubes are fed to the directly fired furnace (1).

## Revendications

1. Procédé de traitement d'une bande de métal (5), la bande de métal (5) étant d'abord traitée thermiquement dans un four à chauffage direct (1) et ensuite traitée thermiquement dans un four (10) chauffé par des tubes radiants, **caractérisé en ce qu'**au moins une partie des gaz d'échappement (16) provenant des tubes radiants sont acheminés vers un brûleur dans le feu à chauffage direct (1) .

2. Procédé selon la revendication 1, **caractérisé en ce que** les gaz d'échappement (16) sont refroidis, par exemple à l'aide d'un échangeur de chaleur, avant qu'ils ne soient acheminés dans le four à chauffage direct (1).

3. Procédé selon la revendication 1 ou 2, **caractérisé en ce que** le four à chauffage direct (1) comporte une chambre de postcombustion (9), dans laquelle les gaz d'échappement (14) provenant du four à chauffage direct (1) sont soumis à une postcombustion, au moins une partie des gaz d'échappement (16) provenant des tubes radiants étant acheminée vers la chambre de postcombustion (9).

4. Procédé selon la revendication 3, **caractérisé en ce qu'**une partie des gaz d'échappement (16) provenant des tubes radiants est dirigée directement dans la chambre de postcombustion (9).

5. Procédé selon la revendication 3, **caractérisé en ce qu'**une partie des gaz d'échappement (16) provenant des tubes radiants est mélangée à l'air de combustion (18) pour le post-brûleur (20) de la chambre de postcombustion (9).

6. Procédé selon l'une quelconque des revendications 1 à 5, **caractérisé en ce qu'**une partie des gaz d'échappement (16) provenant des tubes radiants est mélangée à l'air de combustion (22) pour les brûleurs de la zone de chauffage direct (2).

7. Procédé selon la revendication 6, **caractérisé en ce qu'**une partie des gaz d'échappement (16) provenant des tubes radiants est acheminée au moins vers un brûleur de type sans mélange préalable.

8. Procédé selon l'une quelconque des revendications 1 à 7, **caractérisé en ce que** le four à chauffage direct (1) lorsqu'il est observé dans le sens de traitement de la bande (21), présente avant la zone de chauffage direct (2) une zone non chauffée (7), que traversent les gaz d'échappement (14) de la zone chauffée (2) et qui y préchauffent la bande de métal (5) et les gaz d'échappement (14) après la zone non chauffée (7) sont soumis à la postcombustion dans une chambre de postcombustion (9), dans la zone non chauffée (7) du méthane étant injecté dans le gaz d'échappement (14), transformant ainsi l'oxyde d'azote contenu dans le gaz d'échappement (14) en acide cyanhydrique.

9. Procédé selon la revendication 8, **caractérisé en ce que** dans la chambre de postcombustion (9) est injecté de l'air ou de l'oxygène (25), éliminant ainsi au moins en partie l'acide cyanhydrique.

10. Procédé selon l'une quelconque des revendications 1 à 9, **caractérisé en ce que** 5 à 20 % des gaz d'échappement (16) provenant des tubes radiants sont acheminés dans le four à chauffage direct (1).
